# EUROPÄISCHE PATENTSCHRIFT

(11) **EP 2 238 061 B1**
(45) Veröffentlichungstag und Bekanntmachung des Hinweises auf die Patenterteilung: **29.02.2012**
(21) Anmeldenummer: 09704914.2
(22) Anmeldetag: 19.01.2009
(51) Int. Cl.: B65H 54/28, H02K 41/02, H02K 7/08

(54) **GLEITGELAGERTER FADENFÜHRER**
SLIDINGLY MOUNTED THREAD GUIDE
GUIDE-FIL COULISSANT

(30) Priorität: 24.01.2008 AT 1052008
(43) Veröffentlichungstag der Anmeldung: 13.10.2010
(73) Patentinhaber: Lunatone Industrielle Elektronik GmbH, 1220 Wien (AT)
(72) Erfinder: MAIR, Alexander, A-2285 Breitstetten (AT)
(74) Vertreter: Matschnig, Franz
(86) Internationale Anmeldenummer: PCT/AT2009/000016
(87) Internationale Veröffentlichungsnummer: WO 2009/092122

(56) Entgegenhaltungen:
- EP-A2- 1 342 686
- WO-A1-02/098777
- JP-A- 57 052 365

## Beschreibung

Die Erfindung betrifft eine Fadenführungsvorrichtung für eine Spuleinheit zum Aufspulen von Spulgut auf eine Spule der Spuleinheit, wobei die Fadenführvorrichtung einen Fadenführer umfasst, welcher während des Aufspulens eine Hin- und Herbewegung ausführt, und wobei der Fadenführer als Läufer eines elektrischen Linearmotors ausgebildet ist, und wobei der Läufer zwischen einem ersten Statorteil und einem diesem gegenüberliegend angeordneten zweiten Statorteil verschiebbar gelagert ist, wobei zumindest einer der beiden Statorteile zur Erzeugung eines magnetischen Wanderfeldes vorgesehen ist, und wobei der Läufer zumindest einen Permanentmagneten umfasst, sodass sich der Läufer in dem Wanderfeld entlang des zumindest einen Statorteils bewegen kann.

Auch wenn in diesem Dokument von einem "Faden" bzw. einem "Faden" führer etc. die Rede ist, kann das Spulgut grundsätzlich jede beliebige Form aufweisen, solange es aufspulbar bleibt, also fadenförmig, aber auch z.B. bändchenförmig sein.

Das Bewegen von Reitern einer Fadenführungsvorrichtung mittels elektromagnetisch strombeaufschlagter Spulen ist beispielsweise aus der EP 1 342 686 B1 bekannt. Dieses Dokument beschreibt eine Fadenführungsvorrichtung zum Aufnehmen gesponnener Garne auf Spulen, im Besonderen für Offenend-Spinnmaschinen. Die Vorrichtung weist eine Reihe von Fadenführern auf, welche mittels eines Antriebsmittels vor der zugeordneten Spule hin- und her bewegt werden können. Das Antriebsmittel ist dabei als Läufer eines elektrischen Linearmotors ausgebildet, wobei der Läufer einen magnetischen Balkenkörper aufweist und auf einem Stator, der einen Balkenkörper mit elektromagnetischen strombeaufschlagten Spulen aufweist, angeordnet ist. Durch Erzeugung eines variablen Magnetfeldes mit dem Stator kann der auf dem Stator beweglich angeordnete Läufer vor der Spule hin- und her bewegt werden.

Der Stator weist über seine gesamte Länge Rollenkörper mit horizontaler Achse auf, auf welchen sich der Läufer abstützt und sich mittels Rollreibung in Längsrichtung entlang dem Stator hin- und her bewegen kann.

Mit einer solchen Anordnung sind allerdings keine besonders hohen Geschwindigkeiten und Beschleunigungen, wie sie bei vielen Anwendungen notwendig sind, möglich, da einerseits die Rollenkörper in etwa auf die Geschwindigkeit des Läufers beschleunigt werden müssen und andererseits bei dieser Anordnung eine große Masse bewegt werden muss.

Dementsprechend gibt es Fadenführungsvorrichtungen, bei welchen der Fadenführer selbst als Läufer eines Linearmotors ausgebildet bzw. der einzige Fadenführer einstückig mit dem Linearmotor ausgebildet ist.

Die magnetischen Kräfte des oder der Permanentmagnete des Läufers sind in der Regel so groß, dass dem Thema der Lagerung eines solchen als Läufer ausgebildeten Fadenführers große Bedeutung zukommt, um eine frühzeitige Abnützung oder dauerhafte Beschädigung der Lagerung zu verhindern, welche Reparaturen und somit Standzeiten der Maschine zur Folge hat.

Eine andere Fadenführungsvorrichtung ist aus der WO 02 098 777 A1 bekannt, in der der Läufer zwischen dem ersten Statorteil und dem zweiten Statorteil in einer Gleitlagerung parallel zu den beiden Statorteilen verschiebbar gelagert ist.

Es ist eine Aufgabe der Erfindung, eine Lagerung zu finden, bei der die oben angesprochenen Probleme gemindert oder beseitigt sind.

Diese Aufgabe wird mit einer eingangs erwähnten Fadenführungsvorrichtung dadurch gelöst, dass erfindungsgemäß Positionierungsmittel zum Verändern des Normalabstandes des Läufers zu zumindest einem der beiden Statorteilen vorgesehen sind.

Mit der erfindungsgemäßen Anordnung kann der Läufer in eine kräftefreie Position gebracht werden. Die Reibung kann durch möglichst optimales Positionieren des Läufers zwischen den Statorteilen stark reduziert werden, wodurch einerseits der Energieverbrauch zum Bewegen des Läufers reduziert wird und andererseits die Abnutzung der Gleitlager stark verringert wird.

Der zweite Statorteil kann als Rückschlusselement (zumeist ein Metallteil) ausgebildet sein, was bei speziellen Anordnungen, welche später noch angeführt werden, von Vorteil ist.

Von besonderem Vorteil ist es aber, wenn der zweite Statorteil ebenfalls zur Erzeugung eines magnetischen Wanderfeldes ausgebildet ist. In letzterem Fall ist es schon auf Grund der beiden einander gegenüberliegenden Statorteile und des mit diesen erzeugten Wanderfeldes möglich, den sich zwischen den Statorteilen bewegenden Läufer bezüglich der Lager kräftefrei zu halten, sodass mit den Positionierungsmitteln lediglich noch eine Nachjustierung zur Energieoptimierung erfolgen muss.

Würde man versuchen, man mit dem Wanderfeld die Unsymmetrien auszugleichen, so wären dazu in nachteiliger Weise permanent hohe Ströme notwendig, da sich dadurch an der Geometrie selbst nichts ändern würde.

Bei einer ersten, grundsätzlichen Variante ist vorgesehen, dass die Positionierungsmittel an der Gleitlagerung angreifen und der Abstand des Läufers zu beiden Statorteilen verstellbar ist. Eine solche Ausgestaltung eignet sich sowohl für Varianten, bei denen beide Statorteile als Induktorkamm ausgebildet sind als auch für Varianten, bei denen einer der Statorteile als Rückschlusselement ausgebildet ist. Besonders im Zusammenhang mit 2 Induktorkämmen eignet sich die Einstellung der Gleitlagerung zur kräftefreien Positionierung des Läufers aber besonders.

Bei einer konkreten Ausgestaltung der Erfindung, welche ein besonders einfaches Positionieren des Läufers ermöglicht, umfasst die Gleitlagerung zwei Führungsbuchsen als Bestandteile des Läufers sowie zwei parallel zueinander und parallel zu den beiden Statorteilen verlaufende Führungsstangen, auf welchen der Läufer mittels der Führungsbuchsen verschiebbar gelagert ist.

Zum Positionieren des Läufers ist dann zumindest eine der beiden Führungsstangen in ihrem Abstand zu den beiden Statorteilen verstellbar, wobei die Positionierungsmittel an der zumindest einen verstellbaren Führungsstange zum Verstellen der Position der Führungsstange angreifen.

Eine optimale weil gleichmäßige Positionierung ohne Verkippen des Läufers ist dann möglich, wenn beide Führungsstangen in ihrem Abstand zu den beiden Statorteilen verstellbar sind und die Positionierungsmittel an beiden Führungsstangen zum Verstellen der Position der Führungsstangen angreifen.

Bei einer anderen Variante ist der Läufer an einem, vorzugsweise als Rückschlusselement ausgebildeten Statorteil gleitgelagert und die Positionierungsmittel sind zum Verstellen des Abstandes der beiden Statorteile zueinander eingerichtet. Durch das Verstellen des Abstandes der Statorteile zueinander wird auch der Abstand des Läufers zu dem einem Statorteil verändert, wodurch er in eine kräftefreie Position gebracht werden kann.

Bei einer noch anderen Variante ist zumindest einer der Statorteile in Bezug auf die Gleitlagerung mit den Positionierungsmitteln verstellbar.

Grundsätzlich besteht die Möglichkeit, dass wie weiter oben schon beschrieben, die Statorteile fix sind und die Gleitlagerung in Bezug auf die Statorteile verstellbar ist.

Bei der nun beschriebenen Variante besteht prinzipiell die Möglichkeit, dass die Gleitlagerung ein feststehender Teil der Fadenführungsvorrichtung ist und einer oder beide Statorteile in Bezug auf die Gleitlagerung und somit in Bezug auf den Läufer verstellbar sind.

Konstruktiv einfach ist der Aufbau, wenn die Gleitlagerung in Bezug auf einen Statorteil fix angeordnet ist und die beiden Statorteile in Bezug zueinander verstellbar sind.

Bevorzugt ist dabei der als Ruckschlusselement ausgebildete Statorteil verstellbar, weil auch damit der konstruktive Aufwand geringer gehalten werde kann.

Zum Beispiel kann der Induktorkamm feststehend sein und die Gleitlagerung in Bezug auf diesen fixiert sein, während das Rückschlusselement verstellbar ist.

Bei einer konkreten Variante umfassen die Positionierungsmittel zumindest einen elektromagnetischen Aktor.

Bei einer anderen Variante umfassen die Positionierungsmittel zumindest einen elektromechanischen Aktor, etwa eine Piezokeramik.

Die Positionierungsmittel können auch zumindest einen thermischen Aktor, etwa in Form eines Bimetalls umfassen. Ein solches aus zwei Materialien mit unterschiedlichen Wärmeausdehnungskoeffizienten bestehendes Bauteil kann durch Erwärmung, etwa in Folge eines angelegten Stromflusses, im gewünschten Maß und Richtung zur Verstellung verbogen werden.

Weiters können die Positionierungsmittel zumindest einen elektrochemischen Aktor umfassen. Ein solcher Aktor kann durch eine chemische Änderung, die durch Anlegen eines Stromflusses hervorgerufen wird, seine Form- bzw. sein Volumen ändern, wodurch sich ebenfalls eine Positionierung vornehmen lässt.

Ein besonders einfacher Aufbau der erfindungsgemäßen Vorrichtung lässt sich realisieren, wenn der zumindest eine Aktor der Positionierungsmittel zumindest ein zumindest abschnittsweise, nämlich im Bereich des Stators weichmagnetisches, längliches Biegeelement umfasst, welches mit zumindest einem Abschnitt in Bezug auf die zumindest eine Führungsstange fest positioniert ist, wobei sich das Biegeelement im Wesentlichen parallel zu den beiden Statorteilen und normal auf die Bewegungsrichtung des Läufers zwischen den beiden Statorteilen hindurch erstreckt und normal auf die Bewegungsrichtung des Läufers und normal auf seine Längserstreckung durch Anlegen eines Magnetfeldes mit der zumindest einen bzw. den beiden letzten ausgeprägten Polen des bzw. der Statorteile verbiegbar ist.

Weiters ist es zweckmäßig, wenn das Biegeelement im Bereich der ersten bzw. der ersten beiden Wicklungen des zumindest einen Statorteils angeordnet ist.

Der Aktor weist hier einen besonders einfachen Aufbau auf und besteht im Wesentlichen nur aus dem Biegeelement, welches durch Anlegen eines gezielten Magnetfeldes mittels dem einen oder den beiden Statoren in die gewünschte Richtung und im gewünschten Ausmaß verbogen wird, wodurch die Führungsstange bzw. die beiden Führungsstangen entsprechend positioniert werden.

Durch die Anordnung im Endbereich der Statorteile wird außerdem die Bewegung des Läufers nicht behindert.

Um eine kontrollierte Durchbiegung sowie eine stabile Lagerung des Biegeelementes zu er möglichen, ist das Biegeelement auf beiden Seiten neben den beiden Statorteilen mit Abschnitten fest in Bezug auf die zumindest eine Führungsstange positioniert.

Wie oben in einem allgemeineren Zusammenhang schon ausgeführt ist eine gleichmäßige Positionierung ohne Verkippen des Läufers besonders dann gut realisierbar, wenn das Biegeelement an beiden Führungsstangen angreift.

Bei einer bevorzugten Variante, die einen besonders verschleißfreien Betrieb ermöglicht ist vorgesehen, dass mittels der Positionierungselemente der Abstand des Läufers zu den beiden Statorteilen während des Betriebes eingestellt wird.

Beispielsweise wird dabei die für die Bewegung des Läufers notwendige Energie gemessen und an Hand des Energieverbrauchs erfolgt eine Einstellung der Position des Läufers unter dem Aspekt, den Energieverbrauch zu minimieren. Eine außermittige Positionierung des Läufers bedeutet nämlich höhere Reibung, welche in einem höheren Energieverbrauch mündet.

Noch rascher und direkter lässt sich die optimale Position des Läufers ermitteln und einstellen, wenn die von dem Läufer auf die Führungsstangen wirkende Kraft gemessen und entsprechend die Position des Läufers mittels der Positionierungselemente ausgeregelt wird. In diesem Fall kann nämlich sofort auch die Richtung, in welche die Verschiebung des Läufers zu erfolgen hat, direkt ermittelt werden.

Zusätzlich zu der prinzipiellen Positionierung des Läufers können weiters mittels der Positionierungselemente noch Vibrationen auf die Gleitlagerung übertragen werden. Diese Methode eignet sich besonders gut bei der Verwendung von Führungsstangen.

Durch die Übertragung von Vibrationen auf die Gleitlagerung wird die Gleitreibung verbessert und Haftreibung kann vermieden werden.

Insbesondere im Zeitpunkt des Umkehrens der Hin- und Herbewegung des Läufers, bei welcher es kurzfristig zu einem Stillstand des Läufers kommt, können die Vibrationen die auftretende Reibung (Haftreibung) deutlich vermindern.

Die Vibrationen können in Form von einer Regelbewegung erzeugt werden oder der Regelbewegung wird zusätzlich eine Bewegung in Form einer Störgröße aufgeschaltet. Ist die Positionsregelung so schnell, dass eine Art Vibration um die Mittellage erfolgt, dann führt das zusätzlich zu verbesserten Gleiteigenschaften. Diese Vibration kann zu diesem Zweck auch generell als Störgröße zusätzlich den Positionsaktoren zugeführt werden.

Bei einer weiteren Ausführungsform der Erfindung ist vorgesehen, dass mittels der Positionierungselemente vor oder bei Inbetriebnahme der Abstand des Läufers zu den beiden Statorteilen eingestellt wird.

Eine Einstellung der Position des Läufers überhaupt nur vor oder bei Inbetriebnahme, nicht aber während des Betriebes liefert eine Vorrichtung, welche vergleichsweise einfach im Aufbau ist und eine geringe Komplexität in Hinblick auf die Steuerung und Regelung der Position des Läufers mit sich bringt.

Dies wird in gewissen Fällen für einen guten Betrieb der Fadenführungsvorrichtung ausreichend sein, wesentlich bessere Ergebnisse in Hinblick auf Verschleiß der Maschine ergeben sich aber, wenn eine Ausregelung der Position des Läufers - alternativ oder zusätzlich zu der Ausregelung zu Beginn - permanent während des Betriebes erfolgt.

Im Folgenden ist die Erfindung an Hand der Zeichnung näher erläutert. In dieser zeigt
Fig.1 schematisch eine perspektivische Darstellung einer Spulvorrichtung mit einer Fadenführungsvorrichtung,
Fig. 2 eine erste erfindungsgemäße Anordnung eines erfindungsgemäßen Fadenführers in einer schematischen perspektivischen Darstellung,
Fig. 3 eine zweite erfindungsgemäße Anordnung einer erfindungsgemäßen Fadenführungsvorrichtung in einer schematischen perspektivischen Darstellung,
Fig. 4 die Fadenführungsvorrichtung aus Figur 3 in einer perspektivisch aufgeschnittenen Ansicht, und
Fig. 5 eine Fadenführungsvorrichtung mit einem verstellbaren Statorteil.

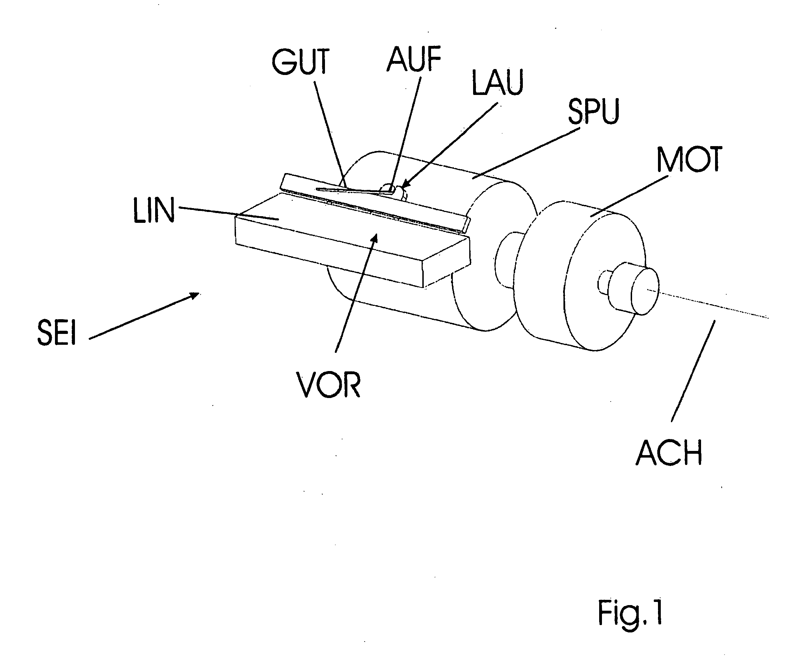

Figur 1 zeigt grob schematisch eine Fadenführungsvorrichtung VOR für eine Spuleinheit SEI zum Aufspulen von fadenförmigem Spulgut GUT. Die Spuleinheit umfasst eine Spule SPU, auf welche das Spulgut GUT aufgespult wird. Dazu wird die Spule SPU mit einem Antrieb MOT, z.B. einem Spindelmotor um ihre Achse ACH gedreht. Angepasst an die Drehbewegung der Spule SPU führt ein Fadenführer das fadenförmige Spulgut GUT in einer Hin- und Herbewegung in bekannter Weise der Spule zu. Das Spulgut GUT ist dabei in einer Führungsaufnahme AUF an dem Fadenführer geführt.

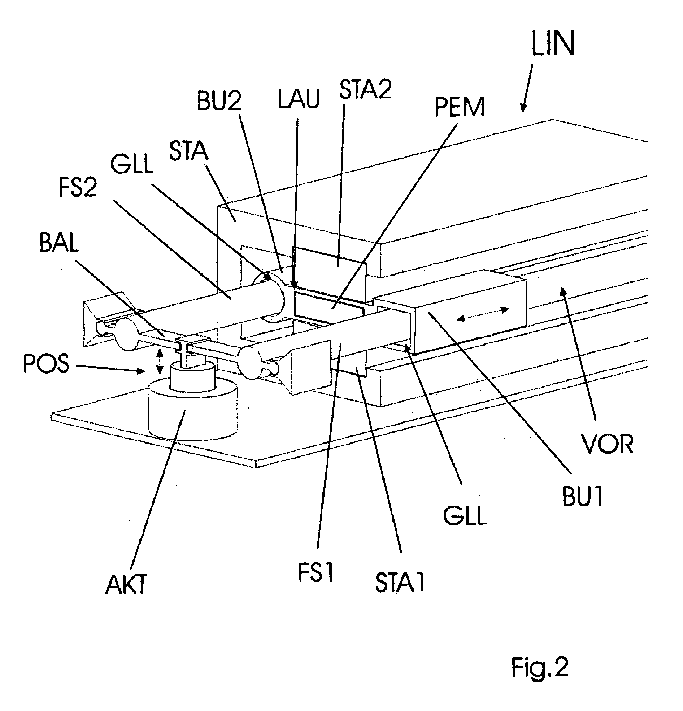

Erfindungsgemäß ist der Fadenführer als Läufer LAU eines elektrischen Linearmotors LIN ausgebildet ist, wobei der Läufer LAU zwischen einem ersten Statorteil STA1 eines Stators STA und einem diesem ersten Statorteil STA1 gegenüberliegend angeordneten zweiten Statorteil STA2 verschiebbar gelagert ist, wie dies in Figur 2 schematisch dargestellt ist. Der Läufer LAU umfasst dabei zumindest einen Permanentmagneten PEM, und zumindest der erste Statorteil STA1 ist zur Erzeugung eines magnetischen Wanderfeldes ausgebildet, in welchem sich der Läufer LAU in Folge seines zumindest einen Permanentmagneten PEM entlang des Stators STA hin- und her bewegt.

Der Läufer LAU ist zwischen dem ersten Statorteil STA1 und dem zweiten Statorteil STA2 in einer Gleitlagerung GLL parallel zu den beiden Statorteilen STA1, STA2 verschiebbar gelagert. Außerdem sind Positionierungsmittel POS zum Verändern des Normalabstandes des Läufers LAU zu den beiden Statorteilen STA21, STA2 vorgesehen.

Grundsätzlich ist vorgesehen, dass einer der beiden, z.B. der untere Statorteil STA1 als sogenannter "Induktorkamm" ausgebildet ist, welcher eine Reihe von Spulen/Wicklungen WIC aufweist, mittels welcher durch Anlegen von Strom ein magnetisches Wanderfeld erzeugt wird, in welchem sich der Läufer LAU entlang des Statorteils STA1 hin- und herbewegen kann. Der andere, in diesem Fall obere Statorteil STA2 kann als Rückschlusslement oder ebenfalls als Induktorkamm ausgebildet sein.

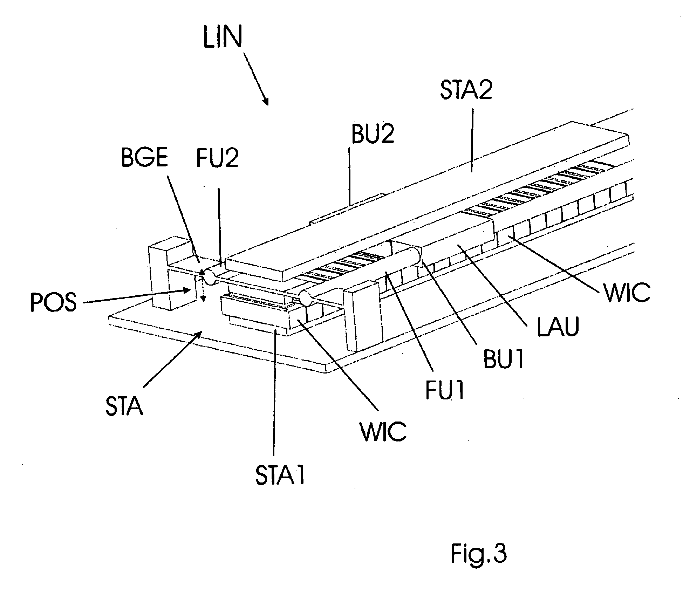

Die Gleitlagerung GLL des Läufers LAU umfasst bei der gezeigten Variante in Figur 2 und 3 zwei Führungsbuchsen BU1, BU2 als Bestandteile des Läufers LAU sowie zwei parallel zueinander und parallel zu den beiden Statorteilen STA1, STA2 verlaufende Führungsstangen bzw. Führungsschienen FS1, FS2, auf welchen der Läufer LAU mittels der Führungsbuchsen BU1, BU2 verschiebbar gelagert ist.

Zum Positionieren des Läufers ist sind die beiden Führungsstangen FS1, FS2 in ihrem Abstand zu den beiden Statorteilen STA1, STA2 mittels Positionierungsmitteln POS verstellbar, wobei die Positionierungsmittel POS an beiden verstellbaren Führungsstangen FS1, FS2 angreifen.

Figur 2 zeigt eine solche Realisierung, bei der ein Aktor AKT über einen Querbalken BAL mit den beiden Führungsstangen FU1, FU2 verbunden ist. Durch ein entsprechendes Verstellen mittels dem Aktor AKT können die beiden Führungsstangen FU1, FU2 angehoben oder angesenkt und dementsprechend der Läufer LAU in seiner Position in Bezug auf die beiden Statorteile STA1, STA2 positioniert werden. Bei dem Aktor handelt es sich beispielsweise um ein Tauchmagnet oder einen Stellmotor, der mit seinem Stellglied an dem Querbalken angreift und über diesen die Führungsstangen FU1, FU2 nach oben oder unten bewegen kann.

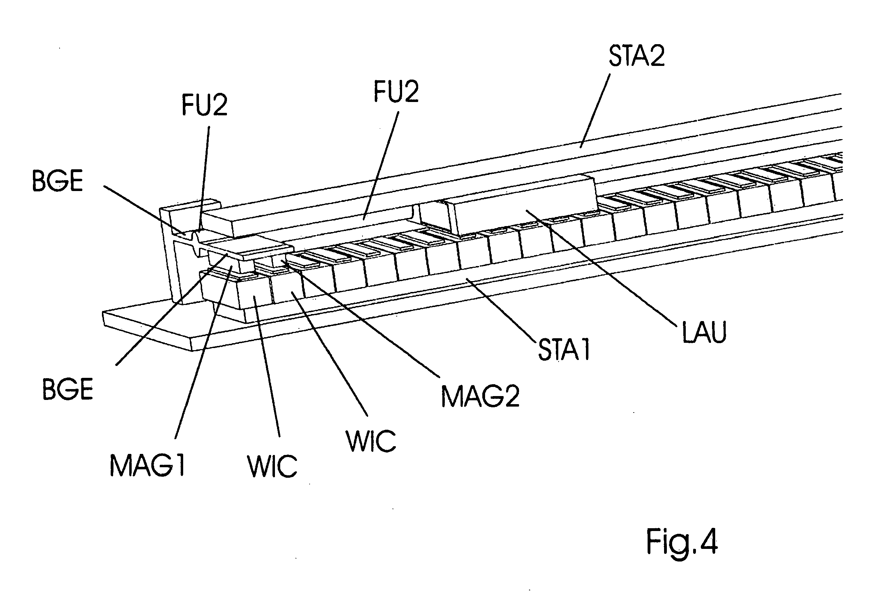

Ein besonders einfacher Aufbau der erfindungsgemäßen Vorrichtung ist in den Figuren 3 und 4 dargestellt.

Bei dieser Variante besteht der mechanische Aktor AKT der Positionierungsmittel POS im Wesentlichen aus einem weichmagnetischen länglichen Biegeelement BGE. Dieses Biegeelement BGE ist zu beiden Seiten des Stators STA fixiert und erstreckt sich zwischen den beiden Statorteilen STA1, STA2, im Wesentlichen normal auf die Bewegungsrichtung des Läufers LAU, hindurch. Das Biegeelement ist weiters in Richtung der beiden Statorteile STA1, STA2, in der gezeigten Lage also nach oben und unten durchbiegbar. Beispielsweise handelt es sich bei dem Biegeelement um ein Flachblech.

Das Biegeelement BGE ist dabei an einem oder beiden (in Hinblick auf die Längserstreckung gesehen) Enden der Statorteile STA1, STA2 angeordnet, um eine ungehinderte Bewegung des Läufers LAU über die gesamte Länge des Stators STA zu erlauben. Das Biegeelement erstreckt sich zwischen den Statorteilen STA1, STA2 im Bereich der ersten oder der ersten beiden Wicklungen des Induktorkammes bzw. der Induktorkämme hindurch, und durch gezieltes Erzeugen eines Magnetfeldes kann das weichmagnetische Biegeelement dann zur Verstellung der Führungsstangen FU1, FU2 und somit des Läufers LAU im gewünschten Ausmaß und in die gewünschte Richtung verbogen werden.

Das weichmagnetische Biegeelement kann entweder aus einem Material bestehen, welches beide Eigenschaften, also weichmagnetisch als auch elastisch verbiegbar, aufweist. Es kann aber auch vorgesehen sein, wie dies auch in den Figuren und besonders gut in Figur 4 zu erkennen ist, dass das Biegeelement an zumindest einer einem Induktorkamm STA1 zugewandten Seite einen oder mehrere Magnete oder Weicheisenteile, in diesem Fall 2 Magnete MAG1, MAG2 aufweist, über welche mittels der den Magneten MAG1, MAG2 zugeordneten Wicklungen eine Verbiegung des Biegeelementes BGE erreicht wird.

Grundsätzlich reicht ein solches Biegeelement an einem Ende der beiden Statorteile aus, es kann aber auch an dem anderen Ende ein weiteres Biegeelement vorgesehen sein. Können beide Seiten eingestellt werden, so ist auch eine statische Kalibrierung möglich.

Einen besonders verschleißfreien Betrieb erreicht man, wenn mittels der Positionierungselemente der Abstand des Läufers LAU zu den beiden Statorteilen STA1, STA2 während des Betriebes eingestellt wird.

Beispielsweise wird dazu die für die Bewegung des Läufers LAU notwendige Energie gemessen und an Hand des Energieverbrauchs erfolgt eine Einstellung der Position des Läufers unter dem Aspekt, den Energieverbrauch zu minimieren. Eine außermittige Positionierung des Läufers bedeutet nämlich höhere Reibung, welche in einem höheren Energieverbrauch mündet.

Diese Methode eignet sich auch zur Kalibrierung, bei welcher der Läufer beschleunigt wird und man diesen dann einfach auslaufen lässt.

Noch rascher und direkter lässt sich die optimale Position des Läufers LAU ermitteln und einstellen, wenn die von dem Läufer LAU auf die Führungsstangen FU1, FU2 wirkende Kraft gemessen und entsprechend die Position des Läufers LAU mittels der Positionierungselemente POS ausgeregelt wird. In diesem Fall kann nämlich sofort auch die Richtung, in welche die Verschiebung des Läufers zu erfolgen hat, direkt ermittelt werden.

Zusätzlich zu der prinzipiellen Positionierung des Läufers können weiters mittels der Positionierungselemente POS noch Vibrationen auf die Gleitlagerung GLL übertragen werden. Diese Methode eignet sich besonders gut bei der Verwendung von Führungsstangen FU1, FU2.

Durch die Übertragung von Vibrationen auf die Gleitlagerung wird die Gleitreibung verbessert und Haftreibung kann vermieden werden.

Die Vibrationen können in Form von einer Regelbewegung erzeugt werden oder der Regelbewegung wird zusätzlich eine Bewegung in Form einer Störgröße aufgeschaltet.

Es kann weiters auch noch vorgesehen sein, dass mittels der Positionierungselemente vor oder bei Inbetriebnahme der Abstand des Läufers LAU zu den beiden Statorteilen STA1, STA2 eingestellt wird.

Eine Einstellung der Position des Läufers LAU überhaupt nur vor oder bei Inbetriebnahme (Kalibrierung), nicht aber während des Betriebes liefert eine Vorrichtung, welche vergleichsweise einfach im Aufbau ist und eine geringe Komplexität in Hinblick auf die Steuerung und Regelung der Position des Läufers mit sich bringt.

Dies wird in gewissen Fällen für einen guten Betrieb der Fadenführungsvorrichtung ausreichend sein, wesentlich bessere Ergebnisse in Hinblick auf Verschleiß der Maschine ergeben sich aber, wenn eine Ausregelung der Position des Läufers - alternativ oder zusätzlich zu der Ausregelung zu Beginn - permanent während des Betriebes erfolgt.

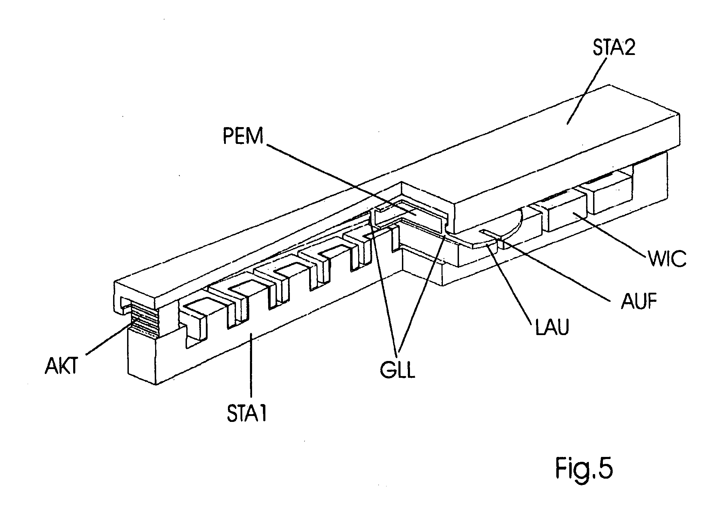

Figur 5 zeigt abschließend noch eine weitere Variante einer erfindungsgemäßen Vorrichtung.

Bei dieser Variante ist der Läufer LAU mit den Permanentmagneten PEM an dem als Rückschlusselement ausgebildeten oberen Statorteil STA2 gleitgelagert. Die Positionierungsmittel POS umfassen einen Aktor AKT, welcher an dem unteren fixen Statorteil STA1, als Induktorkamm mit Wicklungen WIN ausgebildet, gelagert ist und mit welchem Aktor AKT der Abstand des oberen Statorteiles und somit des Läufers zu dem Induktorkamm STA1 verändert werden kann.

Abschließend wird noch darauf hingewiesen, dass in den Figuren 2 - 4 der Stator in einer Lage gezeigt ist, in welcher die Statorteile oben und unten angeordnet sind, und dementsprechend ist in diesem Dokument auch von einem "oberen" und einem "unteren" Statorteil die Rede. In der Praxis kann die Vorrichtung aber auch beispielsweise um 90° gekippt angeordnet sein, sodass die Statorteile dann nicht mehr übereinander, sondern nebeneinander liegen. Auf die Erfindung selbst hat dies allerdings keinen Einfluss.

## Patentansprüche

1. Fadenführungsvorrichtung (VOR) für eine Spuleinheit (SEI) zum Aufspulen von Spulgut (GUT) auf eine Spule (SPU) der Spuleinheit (SEI), wobei die Fadenführvorrichtung einen Fadenführer umfasst, welcher während des Aufspulens eine Hin- und Herbewegung ausführt, und wobei der Fadenführer als Läufer (LAU) eines elektrischen Linearmotors (LIN) ausgebildet ist, und wobei der Läufer (LAU) zwischen einem ersten Statorteil (STA1) und einem diesem gegenüberliegend angeordneten zweiten Statorteil (STA2) verschiebbar gelagert ist, wobei zumindest einer der beiden Statorteile (STA1) zur Erzeugung eines magnetischen Wanderfeldes vorgesehen ist, und wobei der Läufer (LAU) zumindest einen Permanentmagneten (PEM) umfasst, sodass sich der Läufer (LAU) in dem Wanderfeld entlang des zumindest einen Statorteils (STA1) bewegen kann,
der Läufer (LAU) zwischen dem ersten Statorteil (STA1) und dem zweiten Statorteil (STA2) in einer Gleitlagerung (GLL) parallel zu den beiden Statorteilen (STA1, STA2) verschiebbar gelagert ist, **dadurch gekennzeichnet, dass** Positionierungsmittel (POS) zum Verändern des Normalabstandes des < Läufers (LAU) zu zumindest einem der beiden Statorteilen (STA1, STA2) vorgesehen sind.

2. Fadenführungsvorrichtung nach Anspruch 1, **dadurch gekennzeichnet, dass** der zweite Statorteil (STA2) ebenfalls zur Erzeugung eines magnetischen Wanderfeldes ausgebildet ist, oder dass der zweite Statorteil (STA2) als Rückschlusselement ausgebildet ist.

3. Fadenführungsvorrichtung nach Anspruch 1 oder 2, **dadurch gekennzeichnet, dass** die Positionierungsmittel (POS) an der Gleitlagerung (GLL) angreifen und der Abstand des Läufers (LAU) zu beiden Statorteilen (STA1, STA2) verstellbar ist.

4. Fadenführungsvorrichtung nach Anspruch 3, **dadurch gekennzeichnet, dass** die Gleitlagerung (GLL) zwei Führungsbuchsen (BU1, BU2) als Bestandteilen des Läufers (LAU) sowie zwei parallel zueinander und parallel zu den beiden Statorteilen (STA1, STA2) verlaufende Führungsstangen (FS1, FS2) umfasst, auf welchen der Läufer (LAU) mittels der Führungsbuchsen (BU1, BU2) verschiebbar gelagert ist.

5. Fadenführungsvorrichtung nach Anspruch 4, **dadurch gekennzeichnet, dass** zumindest eine der beiden Führungsstangen (FS1, FS2) in ihrem Abstand zu den beiden Statorteilen (STA1, STA2) verstellbar ist und die Positionierungsmittel (POS) an der zumindest einen verstellbaren Führungsstange (FS1, FS2) zum Verstellen der Position der Führungsstange (FS1, FS2) angreifen.

6. Fadenführungsvorrichtung nach Anspruch 4, **dadurch gekennzeichnet, dass** beide Führungsstangen (FS1, FS2) in ihrem Abstand zu den beiden Statorteilen (STA1, STA2) verstellbar sind und die Positionierungsmittel (POS) an beiden Führungsstangen (FS1, FS2) zum Verstellen der Position der Führungsstangen (FS1, FS2) angreifen.

7. Fadenführungsvorrichtung nach Anspruch 1 oder 2, **dadurch gekennzeichnet, dass** der Läufer (LAU) an einem, vorzugsweise als Rückschlusselement ausgebildeten Statorteil (STA2) gleitgelagert ist und die Positionierungsmittel (POS) zum Verstellen des Abstandes der beiden Statorteile (SAT1, STA2) zueinander eingerichtet sind.

8. Fadenführungsvorrichtung nach Anspruch 1 oder 2, **dadurch gekennzeichnet, dass** zumindest einer der Statorteile (STA2) in Bezug auf die Gleitlagerung (GLL) mit den Positionierungsmitteln (POS) verstellbar ist.

9. Fadenführungsvorrichtung nach Anspruch 8, **dadurch gekennzeichnet, dass** die Gleitlagerung (GLL) in Bezug auf einen Statorteil fix angeordnet ist und die beiden Statorteile in Bezug zueinander verstellbar sind, wobei vorzugsweise der als Rückschlusselement ausgebildete Statorteil verstellbar ist.

10. Fadenführungsvorrichtung nach einem der Ansprüche 1 bis 9, **dadurch gekennzeichnet, dass** die Positionierungsmittel zumindest einen magnetischen Aktor umfassen,
oder dass die Positionierungsmittel zumindest einen elektromechanischen Aktor umfassen,
oder dass die Positionierungsmittel zumindest einen thermischen Aktor umfassen,
oder dass die Positionierungsmittel zumindest einen elektrochemischen Aktor umfassen.

11. Fadenführungsvorrichtung nach Anspruch 10, **dadurch gekennzeichnet, dass** der zumindest eine Aktor der Positionierungsmittel (POS) zumindest ein zumindest abschnittsweise weichmagnetisches längliches Biegeelement (BGE) umfasst, welches mit zumindest einem Abschnitt in Bezug auf die zumindest eine Führungsstange (FS1, FS2) fest positioniert ist, wobei sich das Biegeelement (BGE) im Wesentlichen parallel zu den beiden Statorteilen (STA1, STA2) und normal auf die Bewegungsrichtung des Läufers (LAU) zwischen den beiden Statorteilen (STA1, STA2) hindurch erstreckt und normal auf die Bewegungsrichtung des Läufers und normal auf seine Längserstreckung durch Anlegen eines Magnetfeldes mit der zumindest einen bzw. den beiden letzten Wicklungen (WIC) des bzw. der Statorteile verbiegbar ist.

12. Fadenführungsvorrichtung nach Anspruch 11, **dadurch gekennzeichnet, dass** das Biegeelement (BGE) im Bereich der ersten bzw. der ersten beiden Wicklungen (WIC) des zumindest einen Statorteils (STA1, STA2) angeordnet ist.

13. Fadenführungsvorrichtung nach Anspruch 11 oder 12, **dadurch gekennzeichnet, dass** das Biegeelement (BGE) auf beiden Seiten neben den beiden Statorteilen (STA1, STA2) mit Abschnitten fest in Bezug auf die zumindest eine Führungsstange (FS1, FS2) positioniert ist.

14. Fadenführungsvorrichtung nach einem der Ansprüche 11 bis 13, **dadurch gekennzeichnet, dass** das Biegeelement (BGE) an beiden Führungsstangen angreift.

15. Fadenführungsvorrichtung nach einem der Ansprüche 1 bis 14, **dadurch gekennzeichnet, dass** mittels der Positionierungselemente (POS) der Abstand des Läufers (LAU) zu den beiden Statorteilen (STA1, STA2) während des Betriebes eingestellt wird.

16. Fadenführungsvorrichtung nach einem der Ansprüche 1 bis 15, **dadurch gekennzeichnet, dass** die für die Bewegung des Läufers (LAU) notwendige Energie gemessen wird und an Hand des Energieverbrauchs eine Einstellung der Position des Läufers (LAU) erfolgt.

17. Fadenführungsvorrichtung nach einem der Ansprüche 1 bis 16, **dadurch gekennzeichnet, dass** die von dem Läufer (LAU) auf die zumindest eine Führungsstange (FS1, FS2) wirkende Kraft gemessen und entsprechend die Position des Läufers (LAU) mittels der Positionierungselemente (POS) ausgeregelt wird.

18. Fadenführungsvorrichtung nach einem der Ansprüche 1 bis 17, **dadurch gekennzeichnet, dass** mittels der Positionierungselemente (POS) Vibrationen auf die Gleitlagerung (GLL) übertragen werden, wobei vorzugsweise die Vibrationen in Form von einer Regelbewegung erzeugt werden, und wobei weiters vorzugsweise der Regelbewegung zusätzlich eine Bewegung in Form einer Störgröße aufgeschaltet wird.

19. Fadenführungsvorrichtung nach einem der Ansprüche 1 bis 18, **dadurch gekennzeichnet, dass** mittels der Positionierungselemente (POS) vor oder bei Inbetriebnahme der Abstand des Läufers (LAU) zu den beiden Statorteilen (STA1, STA2) eingestellt wird.

## Claims

1. A thread guide apparatus (VOR) for a spool unit (SEI) for winding up a product to be wound (GUT) onto a spool (SPU) of the spool unit (SEI), with the thread guide apparatus comprising a thread guide which carries out a reciprocating movement during winding, and with the thread guide being configured as a rotor (LAU) of an electric linear motor (LIN), and with the rotor (LAU) being displaceably mounted between a first stator part (STA1) and a second stator part (STA2) which is disposed opposite thereof, with at least one of the two stator parts (STA1) being provided for generating a travelling magnetic field, and with the rotor (LAU) comprising at least one permanent magnet (PEM), such that the rotor (LAU) can move in the travelling field along the at least one stator part (STA1), the rotor (LAU) is displaceably mounted between the first stator part (STA1) and the second stator part (STA2) in a sliding bearing (GLL) parallel to the two stator parts (STA1, STA2), **characterized in that** positioning means (POS) for varying the normal distance of the rotor (LAU) to at least one of the two stator parts (STA1, STA2) are provided.

2. A thread guide apparatus according to claim 1, **characterized in that** the second stator part (STA2) is also arranged for generating a travelling magnetic field, or that the second stator part (STA2) is arranged as a return element.

3. A thread guide apparatus according to claim 1 or 2, **characterized in that** the positioning means (POS) act upon the sliding bearing (GLL) and the distance of the rotor (LAU) from the two stator parts (STA1, STA2) is adjustable.

4. A thread guide apparatus according to claim 3, **characterized in that** the sliding bearing (GLL) comprises two guide bushes (BU1, BU2) as components of the rotor (LAU) and two guide rods (FS1, FS2) extending parallel with respect to each other and parallel to the two stator parts (STA1, STA2), on which the rotor (LAU) is displaceably mounted by means of the guide bushes (BU1, BU2).

5. A thread guide apparatus according to claim 4, **characterized in that** at least one of the two guide rods (FS1, FS2) is adjustable with respect to its distance from the two stator parts (STA1, STA2) and the positioning means (POS) act on the at least one adjustable guide rod (FS1, FS2) for adjusting the position of the guide rod (FS1, FS2).

6. A thread guide apparatus according to claim 4, **characterized in that** both guide rods (FS1, FS2) are adjustable with respect to their distance from the two stator parts (STA1, STA2) and the positioning means (POS) act on the two guide rods (FS1, FS2) for adjusting the position of the guide rods (FS1, FS2).

7. A thread guide apparatus according to claim 1 or 2, **characterized in that** the rotor (LAU) is slidingly mounted on a stator part (STA2) preferably arranged as a return element and the positioning means (POS) are arranged for adjusting the distance of the two stator parts (STA1, STA2) with respect to each other.

8. A thread guide apparatus according to claim 1 or 2, **characterized in that** at least one of the stator parts (STA2) is adjustable with the positioning means (POS) with respect to the sliding bearing (GLL).

9. A thread guide apparatus according to claim 8, **characterized in that** the sliding bearing (GLL) is arranged in a fixed manner with respect to a stator part and the two stator parts are adjustable with respect to one another, with preferably the stator part arranged as the return element being adjustable arranged.

10. A thread guide apparatus according to one of the claims 1 to 9, **characterized in that** the positioning means comprise at least one magnetic actuator, or that the positioning means comprise at least one electromechanical actuator, or that the positioning means comprise at least one thermal actuator, or that the positioning means comprise at least one electrochemical actuator.

11. A thread guide apparatus according to claim 10, **characterized in that** the at least one actuator of the positioning means (POS) comprises at least one elongated bending element (BGE) which is at least soft-magnetic in part and which is fixedly positioned with at least one section with respect to the at least one guide rod (FS1, FS2), with the bending element (BGE) extending substantially parallel to the two stator parts (STA1, STA2) and normally to the direction of movement of the rotor (LAU) between the two stator parts (STA1, STA2), and is bendable normally to the direction of movement of the rotor and normally to its longitudinal extension by applying a magnetic field with the at least one or the two last windings (WIC) of the stator part or parts.

12. A thread guide apparatus according to claim 11, **characterized in that** the bending element (BGE) is arranged in the region of the first or the first two windings (WIC) of the at least one stator part (STA1, STA2).

13. A thread guide apparatus according to claim 11 or 12, **characterized in that** the bending element (BGE) is positioned on both sides adjacent to the two stator parts (STA1, STA2) with sections fixed with respect to the at least one guide rod (FS1, FS2).

14. A thread guide apparatus according to one of the claims 11 to 13, **characterized in that** the bending element (BGE) acts on both guide rods.

15. A thread guide apparatus according to one of the claims 1 to 14, **characterized in that** the distance of the rotor (LAU) from the two stator parts (STA1, STA2) during operation is set by means of the positioning elements (POS).

16. A thread guide apparatus according to one of the claims 1 to 15, **characterized in that** the power necessary for the movement of the rotor (LAU) will be measured and a setting of the position of the rotor (LAU) occurs on the basis of power consumption.

17. A thread guide apparatus according to one of the claims 1 to 16, **characterized in that** the force acting by the rotor (LAU) on the at least one guide rod (FS1, FS2) is measured and the position of the rotor (LAU) is adjusted by means of the positioning elements (POS).

18. A thread guide apparatus according to one of the claims 1 to 17, **characterized in that** vibrations are transmitted to the sliding bearing (GLL) by means of the positioning elements (POS), with preferably the vibrations being generated in form of a control motion, and with further preferably a motion in form of a disturbance being additionally applied to the control movement.

19. A thread guide apparatus according to one of the claims 1 to 18, **characterized in that** the distance of the rotor (LAU) from the two stator parts (STA1, STA2) is set before or during start-up by means of the positioning elements (POS).

## Revendications

1. Dispositif de guidage de fil (VOR) pour une unité de bobinage (SEI) servant à bobiner un produit à bobiner (GUT) sur une bobine (SPU) de l'unité de bobinage (SEI), sachant que le dispositif de guidage de fil comporte un guide-fil effectuant un mouvement de va-et-vient au cours du bobinage et sachant que le guide-fil (LAU) est réalisé comme un rotor (LAU) d'un moteur électrique linéaire (LIN) et sachant que le rotor (LAU) est monté de manière à pouvoir être déplacé entre une première partie de stator (STA1) et une deuxième partie de stator (STA2) disposée en regard de la première partie de stator, sachant qu'au moins une des deux parties de stator (STA1) est prévue pour générer un champ d'ondes progressives magnétique, et sachant que le rotor (LAU) comporte au moins un aimant permanent (PEM) de telle sorte que le rotor (LAU) peut se déplacer dans le champ d'ondes progressives le long de la partie de stator (STA1) au moins au nombre de une, que le rotor (LAU) est monté de manière à pouvoir être déplacé de manière parallèle par rapport aux deux parties de stator (STA1, STA2) entre la première partie de stator (STA1) et la deuxième partie de stator (STA2) dans un palier à glissement (GLL), **caractérisé en ce que** des moyens de positionnement (POS) sont prévus pour modifier la distance normale du rotor (LAU) par rapport à au moins une des deux parties de stator (STA1, STA2).

2. Dispositif de guidage de fil selon la revendication 1, **caractérisé en ce que** la deuxième partie de stator (STA2) est également réalisée pour générer un champ d'ondes progressives magnétique, ou **en ce que** la deuxième partie de stator (STA2) est réalisée en tant qu'élément de reflux.

3. Dispositif de guidage de fil selon la revendication 1 ou 2, **caractérisé en ce que** les moyens de positionnement (POS) viennent en prise au niveau du palier à glissement (GLL), et **en ce que** la distance entre le rotor (LAU) et les deux parties de stator (STA1, STA2) peut être ajustée.

4. Dispositif de guidage selon la revendication 3, **caractérisé en ce que** le palier à glissement (GLL) comporte deux manchons de guidage (BU1, BU2) en tant que composants du rotor (LAU) ainsi que deux tiges de guidage (FS1, FS2) s'étendant de manière parallèle entre elles et de manière parallèle par rapport aux deux parties de stator (STA1, STA2), sur lesquelles tiges de guidage le rotor (LAU) est logé de manière à pouvoir être déplacé au moyen des manchons de guidage (BU1, BU2).

5. Dispositif de guidage de fil selon la revendication 4, **caractérisé en ce que** la distance entre au moins une des deux tiges de guidage (FS1, FS2) et les deux parties de stator (STA1, STA2) peut être ajustée, et **en ce que** les moyens de positionnement (POS) viennent en prise au niveau de la tige de guidage au moins au nombre de une pouvant être ajustée (FS1, FS2) pour ajuster la position de la tige de guidage (FS1, FS2).

6. Dispositif de guidage de fil selon la revendication 4, **caractérisé en ce que** la distance entre les deux tiges de guidage (FS1, FS2) et les deux parties de stator (STA1, STA2) peut être ajustée, et **en ce que** les moyens de positionnement (POS) viennent en prise au niveau des deux tiges de guidage (FS1, FS2) pour ajuster la position des tiges de guidage (FS1, FS2).

7. Dispositif de guidage de fil selon la revendication 1 ou 2, **caractérisé en ce que** le rotor (LAU) est monté sur palier lisse au niveau d'une partie de stator (STA2) réalisé de préférence en tant qu'élément de reflux, et **en ce que** les moyens de positionnement (POS) sont montés les uns par rapport aux autres pour ajuster la distance des deux parties de stator (STA1, STA2).

8. Dispositif de guidage de fil selon la revendication 1 ou 2, **caractérisé en ce qu'**au moins une des parties de stator (STA2) peut être ajustée avec les moyens de positionnement (POS) par rapport au palier à glissement (GLL).

9. Dispositif de guidage de fil selon la revendication 8, **caractérisé en ce que** le palier à glissement (GLL) est disposé de manière fixe par rapport à une partie de stator, et **en ce que** les deux parties de stator peuvent être ajustées l'une par rapport à l'autre, sachant que de préférence la partie de stator réalisée en tant qu'élément de reflux peut être ajustée.

10. Dispositif de guidage de fil selon l'une quelconque des revendications 1 à 9, **caractérisé en ce que** les moyens de positionnement comportent au moins un actionneur magnétique,
ou **en ce que** les moyens de positionnement comportent au moins un actionneur électromécanique,
ou **en ce que** les moyens de positionnement comportent au moins un actionneur thermique,
ou **en ce que** les moyens de positionnement comportent au moins un actionneur électrochimique.

11. Dispositif de guidage de fil selon la revendication 10, **caractérisé en ce que** l'actionneur au moins au nombre de un des moyens de positionnement (POS) comporte au moins un élément de flexion (BGE) allongé, au moins par sections magnétique doux, lequel élément de flexion est positionné de manière fixe par rapport à la tige de guidage (FS1, FS2) au moins au nombre de une, avec au moins une section, sachant que l'élément de flexion (BGE) s'étend sensiblement de manière parallèle par rapport aux deux parties de stator (STA1, STA2) et de manière normale dans la direction de déplacement du rotor (LAU) entre les deux parties de stator (STA1, STA2) et qu'il peut être déformé de manière normale dans la direction de déplacement du rotor et de manière normale sur son extension longitudinale en appliquant un champ magnétique avec l'un ou les deux derniers enroulements (WIC) de la ou des parties de stator.

12. Dispositif de guidage de fil selon la revendication 11, **caractérisé en ce que** l'élément de flexion (BGE) est disposé dans la zone du premier ou des deux premiers enroulements (WIC) de la partie de stator au moins au nombre de une (STA1, STA2).

13. Dispositif de guidage de fil selon la revendication 11 ou 12, **caractérisé en ce que** l'élément de flexion (BGE) est positionné de manière fixe par rapport à la tige de guidage au moins au nombre de une (FS1, FS2), avec des sections, sur les deux côtés à côté des deux parties de stator (STA1, STA2).

14. Dispositif de guidage de fil selon l'une quelconque des revendications 11 à 13, **caractérisé en ce que** l'élément de flexion (BGE) vient en prise au niveau des deux tiges de guidage.

15. Dispositif de guidage de fil selon l'une quelconque des revendications 1 à 14, **caractérisé en ce qu'**au moyen des éléments de positionnement (POS), la distance entre le rotor (LAU) et les deux parties de stator (STA1, STA2) est ajustée au cours du fonctionnement.

16. Dispositif de guidage de fil selon l'une quelconque des revendications 1 à 15, **caractérisé en ce que** l'énergie nécessaire au déplacement du rotor (LAU) est mesurée, et **en ce qu'**une consommation d'énergie permet l'ajustement de la position du rotor (LAU).

17. Dispositif de guidage de fil selon l'une quelconque des revendications 1 à 16, **caractérisé en ce que** la force agissant par le rotor (LAU) sur la tige de guidage au moins au nombre de une (FS1, FS2) est mesurée, et que de manière correspondante la position du rotor (LAU) est réglée jusqu'à pleine puissance au moyen des éléments de positionnement (POS).

18. Dispositif de guidage de fil selon l'une quelconque des revendications 1 à 17, **caractérisé en ce que** des vibrations sont transmises au moyen des éléments de positionnement (POS) sur le palier à glissement (GLL), sachant que de préférence les vibrations sont générées sous la forme d'un mouvement de réglage et sachant qu'en outre de préférence, en plus du déplacement de réglage, un déplacement est introduit sous la forme d'une perturbation.

19. Dispositif de guidage de fil selon l'une quelconque des revendications 1 à 18, **caractérisé en ce qu'**au moyen des éléments de positionnement (POS), la distance entre le rotor (LAU) et les deux parties de stator (STA1, STA2) est ajustée avant et au cours de la mise en service.
